# EUROPEAN PATENT APPLICATION

(11) **EP 2 291 025 A1**
(43) Date of publication of application: **02.03.2011**
(21) Application number: 09757098.0
(22) Date of filing: 08.06.2009
(51) Int. Cl.: H04W 36/00

(54) **METHOD, APPARATUS AND SYSTEM FOR CALL HANDOVER AND PROCESS**

(30) Priority: 07.06.2008 CN 200810109387
(71) Applicant: Huawei Technologies Co., Ltd., Longgang District, Shenzhen Guangdong 518129 (CN)
(72) Inventor: QIN, Jun, Shenzhen Guangdong 518129 (CN); ZHU, Xing, Shenzhen Guangdong 518129 (CN); WANG, Zhixi, Shenzhen Guangdong 518129 (CN)
(74) Representative: Charles, Glyndwr
(86) International application number: PCT/CN2009/072172
(87) International publication number: WO 2009/146664

(57) **Abstract**

A method, a device, and a system for call handover and call processing are provided. The method for call handover includes the following steps. An add endpoint request message is sent to a media gateway (MGW), in which the add endpoint request message carries endpoint information about a Time Division Multiple (TDM) type and codec information that corresponds to the TDM type, and endpoint information about an Internet Protocol (IP) type and codec information that corresponds to the IP type. An add endpoint reply message indicating that the MGW successfully establishes a TDM endpoint and an IP endpoint is received, and a Handover Request message carrying a circuit identifier code (CIC) information element and the endpoint information about an IP type is sent to a target Base Station Controller (BSC). A Handover Request Acknowledge message carrying the endpoint information about a TDM type or the endpoint information about an IP type returned by the target BSC is received. A call failure case caused by different between TDM endpoints individually assigned by the target BSC and a core network (CN) side can be prevented, thereby increasing a call success rate.

## Description

### FIELD OF THE INVENTION

The present invention relates to the field of mobile communication, and in particular, to a method, a device, and a system for call handover and call processing.

### BACKGROUND OF THE INVENTION

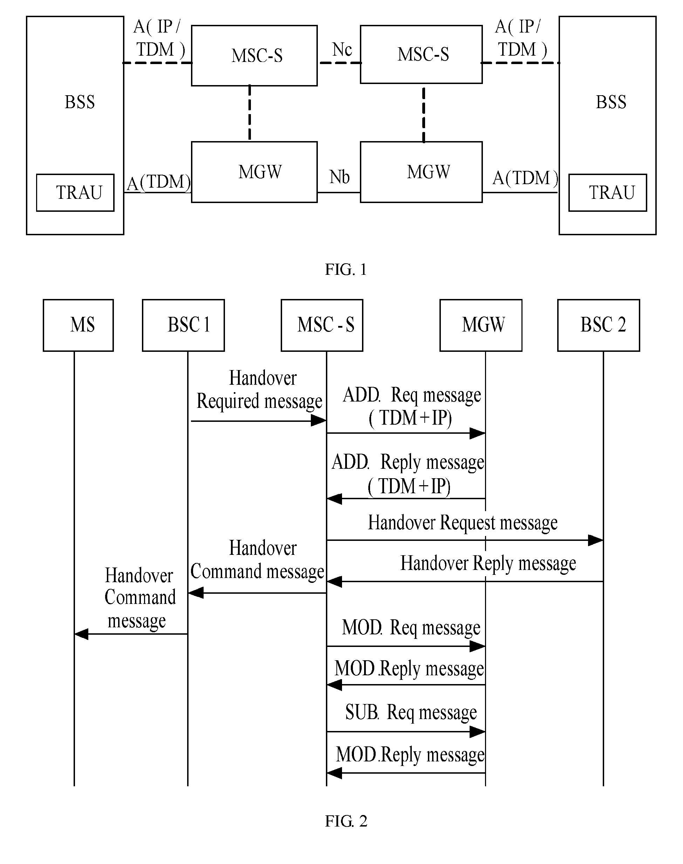

The Global System for Mobile communication (GSM) initially transmits signals based on a Time Division Multiple (TDM) transmission manner. Afterwards, with continuous development and generalization of Internet Protocol (IP) technologies, a Core Network (CN) completely implements IP realization, and A interface signaling plane IP transmission SIGTRAN between the CN and an access network is introduced. A schematic diagram of the GSM system is as shown in FIG. 1, in which dashed lines denote a signaling plane, and solid lines denote a user plane. In the architecture, only the A interface user plane still adopts a TDM manner, which becomes a final obstacle of the global network IP realization. Then, the 3^{rd} Generation Partnership Project (3GPP) proposes A interface over IP (AoIP), so as to discuss a solution for A interface user plane IP realization.

When the A interface adopts a TDM transmission manner, a fixed link of a coaxial cable is configured to connect the CN and a Base Station Controller (BSC), and each call occupies one 64 kbps timeslot on the coaxial cable, that is, user plane transmission of one call necessarily occupies one fixed timeslot resource, so that an original protocol uses a Call Identifier Code or Circuit Identifier Code (CIC) to uniquely identify one call. A length of a CIC information element is 2 bytes. For a coaxial cable using 2 M bandwidth (that is, one relay, which can be multiplexed into thirty two 64 kbps timeslots), five bit positions XXXXX can be used to identify a specific used timeslot number, and totally eleven bit positions from a to k are used to identify a used relay number. An expression manner of the CIC is as shown in Table 1.

**Table 1**

| **8** | **7** | **6** | **5** | **4** | **3** | **2** | **1** | |
|---|---|---|---|---|---|---|---|---|
| Information Element Identifier | | | | | | | | Byte 1 |
| a | b | c | d | e | f | g | h | Byte 2 |
| i | j | k | X | X | X | X | X | Byte 3 |

After the AoIP is introduced, a route between the CN and the BSC is not a fixed link any more. Because the CIC does not correspond to the timeslot number of the fixed link one by one any more, the CIC cannot be used any more to identify one call, and then a Call Identifier (Call-ID) is introduced to identify the call. When a Mobile Switching Center (MSC) or a BSC loses a Signaling Connection Control Part (SCCP) link of its opposite party, the Call-ID can be used as an object to require the opposite party to synchronously release relevant call resources. If the network configuration is MSC pool A-flex (MSC in Pool), the call generates errors due to an abnormal address. Therefore, when calls need to be released in batches, using a list of Call-IDs is particularly high efficient.

When the network supports the AoIP, a Call-ID can be used to uniquely identify one call on a relevant BSC and a relevant MSC; and the BSC needs to return a Call-ID value assigned by the MSC in an Assignment Complete message and a Handover Request Acknowledge message. Two expression manners for a Call-ID are provided.

### 1. (IP address + UDP port number) pair

For a manner of the (IP address + UDP port number) pair, if an adopted version is IPv4, an overhead of one IP address is 4 bytes, and if 2 bytes of an identifier port are further added, the address pair needs at least 12 bytes; while for IPv6, an overhead of one IP address is 16 bytes, and if 2 bytes of an identifier port are added, the address pair needs at least 36 bytes.

### 2. A bearer-independent number

For the manner, in order to guarantee uniqueness of a value of the identifier at the same moment, currently, a solution expressed by using a value of 32 bit positions is provided, and is as shown in the following table:

**Table 2**

| **8** | **7** | **6** | **5** | **4** | **3** | **2** | **1** | |
|---|---|---|---|---|---|---|---|---|
| Call-ID (lowest bit) | | | | | | | | Byte 1 |
| Call-ID | | | | | | | | Byte 2 |
| Call-ID | | | | | | | | Byte 3 |
| Call-ID (highest bit) | | | | | | | | Byte 4 |

The bearer-independent number identifier is 1 byte (8 bit positions), and the bearer-independent number is 4 bytes (32 bit positions).

When the BSC carries a BSC-Supported Codec List (BSC-SCL, capable of denoting that the BSC supports the AoIP) in a Complete Layer3 message, the MSC can identify the call in a Call-ID value manner and carry a Call-ID information element in an Assignment Request message, and the BSC uses the same Call-ID value. However, meanwhile, the BSC also may finally select to use the TDM manner, that is, the BSC must provide one CIC information element for the MSC and use one specific CIC value to identify an assigned TDM endpoint, so that at this time the MSC and the BSC are allowed to use the Call-ID to identify the call.

During a call procedure, when a user terminal hands over between two BSCs belonging to the same MSC, because a target BSC does not report a current capability of supporting the A interface to the MSC, an MSC Server (MSC-S) is only capable of firstly applying for endpoints in a TDM type and an IP type simultaneously on a media gateway (MGW) for the target BSC, and a handover process of which is as shown in FIG. 2. It is specified in the current solution that a Handover Request message cannot carry a Channel Type information element simultaneously in a case of carrying an MSC-Preferred Codec List (MSC-PCL), so that the Handover Request message cannot carry the CIC information element (even if objectively the length is sufficient for the Handover Request message to carry the CIC). If the target BSC selects the TDM endpoint after receiving the Handover Request message, it is very possible for the target BSC to assign and return one CIC value mismatched with the created TDM endpoint on the MGW to the MSC-S. At this time, the MSC-S enters an abnormal processing procedure and releases the call due to CIC mismatch between an MGW side and a target BSC side.

In a procedure of implementing the present invention, the inventors find out that the prior art at least has the following drawbacks. Byte overhead of an identification manner of the (IP address +UDP port number) pair is too large, so that redundancy exists between the byte overhead and IP and UDP information in an AoIP Container information element, and practical resources (IP and port value) after occurrence of handover may be inconsistent with the indication value. Furthermore, a limitation that the MSC-PCL and the CIC information element cannot be carried simultaneously exists in the Handover Request message, so that the CIC value assigned by the target BSC may be mismatched with the CIC value corresponding to the TDM endpoint created by the MGW, and a call failure is caused.

Additionally, in the identification manner of the bearer-independent number, for example, in a case that the same BSC is connected to multiple MSCs (that is, MSC in Pool), if the multiple MSCs in Pool cannot coordinate and assign the Call-ID value reasonably and timely, it is very possible to assign a Call-ID with the same value to the same BSC at a certain moment, and a processing process that the BSC receives a repetitive Call-ID value is not provided in the prior art.

### SUMMARY OF THE INVENTION

Accordingly, the present invention is directed to a method, a device, and a system for call handover and call processing, so as to solve a drawback in the prior art that a TDM endpoint of a target BSC and a TDM endpoint assigned by an MGW may be different in a call handover procedure, thereby causing call failure.

An embodiment of the present invention provides a method for call handover. The method includes:
receiving an add endpoint reply message sent by an MGW;
sending a Handover Request message carrying a CIC and endpoint information about an IP type to a target BSC, when the add endpoint reply message indicates that the MGW successfully establishes a TDM endpoint and an IP endpoint; and
receiving the Handover Request Acknowledge message returned by the target BSC, where when the Handover Request Acknowledge message carries the endpoint information about an IP type, it indicates that the target BSC selects the IP port manner.

An embodiment of the present invention further provides a device for call handover. The device is configured to communicate with a media gateway (MGW) and a Base Station Controller (BSC). The device includes:
an add endpoint reply receiving module, configured to receive an add endpoint reply message sent by an MGW;
a Handover Request message module, configured to send a Handover Request message carrying a CIC and endpoint information about an IP type to a target BSC when the add endpoint reply message indicates that the MGW successfully establishes a TDM endpoint and an IP endpoint; and
a Handover Acknowledge message module, configured to receive a Handover Request Acknowledge message returned by the target BSC, where when the Handover Request Acknowledge message carries the endpoint information about an IP type, it indicates that the target BSC selects an IP port manner.

An embodiment of the present invention further provides a method for call handover. The method includes:
receiving an add endpoint reply message sent by an MGW, where the add endpoint reply message indicates that an IP endpoint is already established;
sending a Handover Request message carrying a Call-ID formed by a network element (NE) identifier and an NE Call-ID to a target BSC; or selecting one Call-ID value that is not occupied from a Call-ID value interval assigned to an MSC, and sending a Handover Request message carrying the selected Call-ID value to the target BSC, in which Call-ID value intervals assigned to MSCs do not overlap with each other; and
receiving a Handover Request Acknowledge message returned by the target BSC after establishing a call identified by the Call-ID value.

An embodiment of the present invention further provides a method for call processing. The method includes:
receiving an Assignment Request message or a Handover Request message, where the Assignment Request message or the Handover Request message carries a Call-ID, and when failing to assign a call according to the Assignment Request message carrying the Call-ID or the Handover Request message carrying the Call-ID, returning an Assignment Failure message carrying a failure reason indication value or a Handover Failure message carrying a failure reason indication value to an MSC, in which the failure reason indication value indicates that the Call-ID exists or a format of the Call-ID is incorrect.

An embodiment of the present invention further provides a device for call handover. The device includes:
a second Handover Request module, configured to receive an add endpoint reply message sent by an MGW, where the add endpoint reply message indicates that an IP endpoint is already established; send a Handover Request message carrying a Call-ID formed by an NE identifier and an NE Call-ID to a target BSC; or select one Call-ID value that is not occupied from a Call-ID value interval assigned to an MSC, and send a Handover Request message carrying the selected Call-ID value to the target BSC, in which Call-ID value intervals assigned to MSCs do not overlap with each other; and
an Acknowledge receiving module, configured to receive a Handover Request Acknowledge message returned by the target BSC after establishing a call identified by the Call-ID value.

An embodiment of the present invention further provides a device for call processing. The device includes:
a message receiving module, configured to receive an Assignment Request message carrying a Call-ID, or receive a Handover Request message carrying the Call-ID; and
a failure message sending module, configured to return an Assignment Failure message carrying a failure reason indication value to an MSC when failing to assign a call according to the Assignment Request message carrying the Call-ID received by the message receiving module, in which the failure reason indication value indicates that the Call-ID exists or a format of the Call-ID is incorrect; or, configured to return a Handover Failure message carrying a failure reason indication value to the MSC when failing to assign a call according to the Handover Request message carrying the Call-ID received by the message receiving module, in which the failure reason indication value indicates that the Call-ID exists or the format of the Call-ID is incorrect.

According to the embodiments of the present invention, the Handover Request message sent to the target BSC carries the CIC value and the IP endpoint information, so that the CIC value assigned by the MSC can be directly used when the target BSC selects the TDM type endpoint. Thus, a call failure caused by mismatch between TDM endpoints individually assigned by the target BSC and an MGW side is prevented. Therefore, a call success rate is increased.

### BRIEF DESCRIPTION OF THE DRAWINGS

FIG. 1 is a schematic diagram of a GSM network in the prior art;
FIG. 2 is a flow chart of call handover in the prior art;
FIG. 3 is a flow chart of Embodiment 1 of a method for call handover according to the present invention;
FIG. 4 is a flow chart of Embodiment 2 of a method for call handover according to the present invention;
FIG. 5 is a flow chart of Embodiment 3 of a method for call handover according to the present invention;
FIG. 6 is a flow chart of Embodiment 4 of a method for call handover according to the present invention;
FIG. 7 is a flow chart of Embodiment 5 of a method for call handover according to the present invention;
FIG. 8 is a schematic block diagram of a system for call handover according to an embodiment of the present invention;
FIG. 9 is a schematic block diagram of a device for call handover according to an embodiment of the present invention;
FIG. 10 is a flow chart of a method for call establishment according to an embodiment of the present invention;
FIG. 11 is a schematic block diagram of a device for call establishment according to an embodiment of the present invention;
FIG. 12 is a flow chart of Embodiment 1 of a method for call processing according to the present invention;
FIG. 13 is a flow chart of Embodiment 2 of a method for call processing according to the present invention; and
FIG. 14 is a schematic block diagram of a device for call processing according to an embodiment of the present invention.

### DETAILED DESCRIPTION OF THE EMBODIMENTS

In an embodiment, the present invention provides a method for call handover, which includes the following steps. An add endpoint reply (described as "ADD.Reply" in figures) message sent by an MGW is received. When the add endpoint reply message indicates that the MGW successfully establishes a TDM endpoint and an IP endpoint, a Handover Request message carrying a CIC and endpoint information about an IP type is sent to a target BSC. When a Handover Request Acknowledge message returned by the target BSC is received, it indicates that the target BSC selects an IP port manner when the Handover Request Acknowledge message carries the endpoint information about an IP type. When a Handover Request Acknowledge message returned by the target BSC is received, it indicates that the target BSC selects a TDM port manner when the handover Handover Request Acknowledge message carries the CIC .

On the basis of the embodiment, the MSC-S can further send an add endpoint request (described as "ADD.Req" in figures) message to the MGW firstly, so as to acquire the add endpoint reply message.

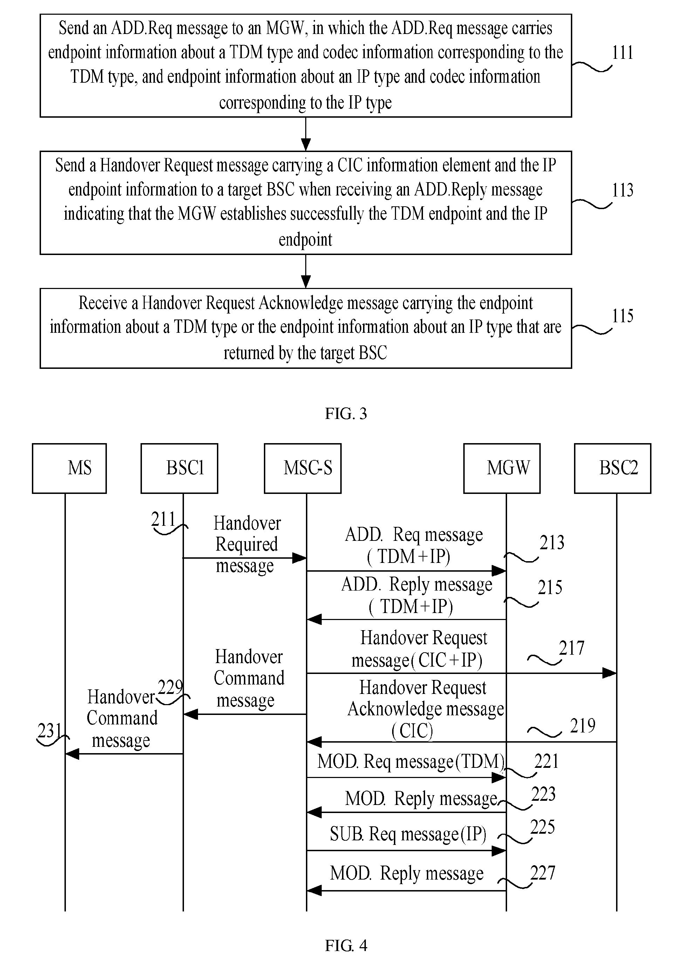

FIG. 3 is a schematic view of Embodiment 1 of a method for call handover according to the present invention. In this embodiment, a source BSC is a BSC1, a target BSC is a BSC2, and the BSC1 and the BSC2 belong to the same MSC. Specifically, the method includes the following steps:

In step 111, an add endpoint request message is sent to an MGW, in which the add endpoint request message carries endpoint information about a TDM type and codec information that corresponds to the TDM type, and endpoint information about an IP type and codec information that corresponds to the IP type. The codec information can also include codec information recommended by a call.

In step 113, when an add endpoint reply message indicating that the MGW successfully establishes a TDM endpoint and an IP endpoint is received, a Handover Request message carrying a CIC and the IP endpoint information is sent to a target BSC.

In step 115, a Handover Request Acknowledge message carrying the endpoint information about a TDM type or the endpoint information about an IP type returned by the target BSC is received. By using the method and the device for call handover according to the present invention, the Handover Request message sent to the target BSC carries a CIC value and IP endpoint information, so that the CIC value assigned by the MSC can be directly used when the target BSC selects a TDM type endpoint. Thus, a call failure caused by different between TDM endpoints individually assigned by the target BSC and an MGW side is prevented. Therefore, a call success rate is increased. Meanwhile, in a manner of respectively creating the TDM endpoint and the IP endpoint, a resource overhead is reduced, and a handover speed is increased.

FIG. 4 is a schematic view of Embodiment 2 of a method for call handover according to the present invention. In this embodiment, as an example, a target BSC selects a TDM port manner. In this embodiment, a source BSC is a BSC1, a target BSC is a BSC2, and the BSC1 and the BSC2 belong to the same MSC. Specifically, the method includes the following steps:

In step 211, the BSC1 sends a Handover Required message to an MSC-S.

The Handover Required message carries access network speech codec (Ran Codec (RanC1)) currently used by a user MS and the BSC1.

In step 213, after receiving the Handover Required message, the MSC-S sends an add endpoint request message to an MGW. The message carries preferred RanC information (pRanC), and carries endpoint information simultaneously. For example, the endpoint information can include types of endpoints to be created by the MGW, that is, a TDM endpoint and an IP endpoint.

The user MS uses an AoIP interface to perform a normal speech service in the BSC1, and both the BSC1 and the BSC2 belong to the same MSC. When the MS is handed over from the BSC1 to the BSC2, at this time, the MSC-S does not know a support capability of current (dynamic) speech codec of the BSC2 and a relevant A interface type, so that in order to guarantee quick and successful handover, before the MS is handed over to the BSC2, an IP endpoint and a TDM endpoint paired with the BSC2 are required to be created for the BSC2 on the MGW.

In step 215, the MGW creates the TDM endpoint and the IP endpoint paired with the BSC2 according to the received add endpoint request message, and returns an add endpoint reply message. The message carries types of created endpoints, which are the TDM endpoint and the IP endpoint in this embodiment.

In step 217, the MSC-S receives the add endpoint reply message, and sends a Handover Request message to the BSC2.

The Handover Request message carries an MSC-PCL1 (in which the speech codecs are sequenced in a recommended order, and an updated pRanC is an optimal pRanC), TDM endpoint information, and IP endpoint information. The TDM endpoint information can include a CIC information element, and a value of the CIC information element can be a CIC1 value corresponding to the TDM endpoint created by the MGW

In step 219, the BSC2 receives the Handover Request message, accepts the CIC1 value, selects a speech codec RanC2 from the MSC-PCL1, and carries the RanC2, the CIC1 value, and the speech codec list currently supported by the BSC2 in a Handover Request Acknowledge message and returns them to the MSC-S.

The MSC-S can know that the BSC2 selects an A interface in a TDM transmission manner according to the CIC information element carried in the message, because the TDM endpoint is created on the MGW, the type of the endpoint selected by the BSC2 is consistent with the type of the TDM endpoint created on the MGW. When the message needs to carry the CIC information element, a value of the carried CIC is CIC1, that is, the value of the CIC information element is the same as the value of the CIC information element in the Handover Request message. When a CN assigns a TDM endpoint resource paired with the BSC2, in this embodiment, the MSC-S must carry the CIC information element in the Handover Request message sent to the BSC2 and explicitly indicate the CIC value.

In step 221, the MSC-S receives the Handover Request Acknowledge message, determines that the BSC2 selects the TDM transmission manner, and sends a modify endpoint request (described as "MOD.Req" in figures) message carrying the type of RanC2 codec selected by the BSC2 and relating to the TDM endpoint to the MGW.

In step 223, the MGW modifies the created TDM endpoint, so that the TDM endpoint is capable of using the codec type RanC2. Meanwhile, the TDM endpoint is activated, so that a TDM link between the MGW and the BSC2 is already established, a call service can be performed, and then the MGW returns a modify endpoint reply (described as "MOD.Reply" in figures) message to the MSC-S.

In step 225, the MSC-S sends a delete endpoint request (described as "SUB.Req" in figures) message carrying information of the IP endpoint created by the MGW to the MGW.

Because the BSC2 finally selects the TDM transmission manner, the IP endpoint created by the MGW previously needs not to be reserved, and the endpoint can be released.

In step 227, the MGW deletes the previously created IP port, and returns a delete endpoint reply message to the MSC-S.

In step 229, the MSC-S sends a Handover Command message to the BSC1. The Handover Command message carries the codec type RanC2 selected and used by the BSC2.

In step 231, the BSC1 sends the Handover Command message to the MS.

Through the Handover Command message, the RanC2 is notified to the MS, and handover of the MS is triggered. The MS is adjusted and is handed over onto an assignment channel of the BSC2 according to the Handover Command message, modifies the speech codec type of itself into the RanC2 simultaneously, and then uses the RanC2. If the RanC2 is the same as the RanC1, the MS continues using the RanC1.

In this embodiment, sequences of steps 225 to 227 and steps 229 to 231 are not limited, and steps 225 to 227 can be executed before steps 229 to 231 and can also be executed after steps 229 to 231.

The embodiment of the present invention is capable of guaranteeing that, when the target BSC selects the A interface in the TDM transmission manner, the target BSC is capable of selecting and using a CIC value being the same as that assigned by the CN in advance, so as to guarantee a normal process of the call after handover and optimize the call handover process.

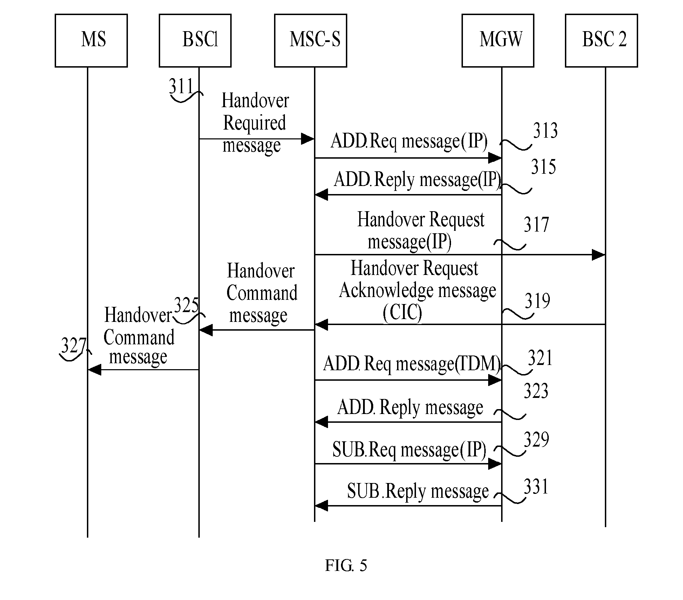

FIG. 5 is a flow chart of Embodiment 3 of a method for call handover according to the present invention. In this embodiment, as an example, a target BSC selects a TDM port manner. The method includes the following steps.

In step 311, a BSC1 sends a Handover Required message to an MSC-S. The Handover Required message carries RanC1 currently used by a user MS and the BSC1.

In step 313, after receiving the Handover Required message, the MSC-S sends an add endpoint request message to an MGW. The message carries pRanC of an MSC, and carries endpoint information simultaneously. For example, the endpoint information can include a type of endpoint to be created by the MGW, which is an IP endpoint in this embodiment.

In step 315, the MGW creates the IP endpoint paired with a BSC2 according to the received add endpoint request message, and returns an add endpoint reply message. The message carries information of the created IP endpoint.

In step 317, the MSC-S receives the add endpoint reply message, and sends a Handover Request message to the BSC2.

The Handover Request message carries MSC-PCL1 (in which the speech codecs are sequenced in a recommended order, and an updated pRanC is an optimal pRanC) and the IP endpoint information.

In step 319, the BSC2 receives the Handover Request message, selects a TDM type endpoint, endows a value of CIC1, selects a corresponding speech codec type RanC2 from the MSC-PCL1, and carries the RanC2, the CIC1 value, and the speech codec list currently supported by the BSC2 in a Handover Request Acknowledge message and returns them to the MSC-S.

The CIC1 value carried in the message denotes that the BSC2 selects a TDM transmission manner, so that a TDM endpoint needs to be created on the MGW correspondingly.

In step 321, if the MSC-S determines that the type of the TDM endpoint selected by the BSC2 is inconsistent with the type of the IP endpoint created on the MGW, the MSC-S sends the add endpoint request message carrying information of the TDM endpoint created on the BSC2 and the RanC2 to the MGW.

Although previously the MGW creates a corresponding IP endpoint for the BSC2, the BSC2 finally selects the TDM transmission manner, so that the MSC-S further needs to notify the MGW of establishing one corresponding TDM endpoint for the BSC2.

In step 323, the MGW creates a TDM endpoint paired with the BSC2 according to the speech codec type RanC2 and the TDM endpoint information in the add endpoint request message; and returns the add endpoint reply message to the MSC-S after successfully creating the TDM endpoint.

In step 325, the MSC-S sends a Handover Command message to the BSC1. The message carries the speech codec type RanC2.

In step 327, the BSC1 sends the Handover Command message to the MS.

In step 329, the MSC-S sends a delete endpoint request message carrying information of the IP endpoint created in advance to the MGW.

In step 331, the MGW deletes the corresponding IP endpoint, and returns a delete endpoint reply message to the MSC-S.

In this embodiment, sequences of steps 325 to 327 and steps 329 to 331 are not limited, and steps 325 to 327 can be executed before steps 329 to 331 and can also be executed after steps 329 to 331.

It can be known from Embodiment 2 and Embodiment 3 that, when the BSC2 decides to use the A interface in the TDM transmission manner, two manners for assigning the CIC are provided.
(1) Similar to the process in Embodiment 3, the Handover Request message sent to the BSC2 by the MSC-S does not carry the channel type information element and the CIC information element, that is, the CN does not assign the TDM endpoint in advance. After receiving the Handover Request message and deciding to use an A interface circuit in the TDM transmission manner, the BSC2 carries the CIC value assigned by the BSC2 in the returned Handover Request Acknowledge message, and then after receiving the Handover Request Acknowledge message, the MSC-S notifies the MGW of assigning the TDM endpoint paired with the BSC2 according to the CIC value, and releasing the previously created IP endpoint.
(2) Similar to the process in Embodiment 2, the Handover Request message sent to the BSC2 by the MSC-S does not carry the channel type information element, but carries the CIC information element, that is, the CN assigns the TDM endpoint while assigning the IP endpoint in advance. After receiving the Handover Request message, the BSC2 accepts the CIC value assigned by the CN, and explicitly uses the CIC value in the CIC information element carried in the returned Handover Request Acknowledge message, that is, the CIC value must be consistent with the CIC value carried in the Handover Request message. Then, the MSC-S notifies the MGW of modifying and activating the TDM endpoint on the MGW, and releases the previously created IP endpoint simultaneously.

The embodiment of the present invention is capable of guaranteeing that, when the target BSC selects the A interface in the TDM transmission manner, the target BSC is capable of selecting and using a CIC value the same as that assigned by the CN in advance, so as to guarantee a normal process of the call after handover and optimize the call handover process. Further, according to the embodiment of the present invention, one endpoint is firstly created. When the created endpoint is inconsistent with the endpoint type selected by the target BSC, an endpoint in the type selected by the target BSC is recreated and is matched with the endpoint selected by the BSC, so as to solve problems of the slow handover speed and the resource waste caused by firstly creating all types of endpoints in the prior art.

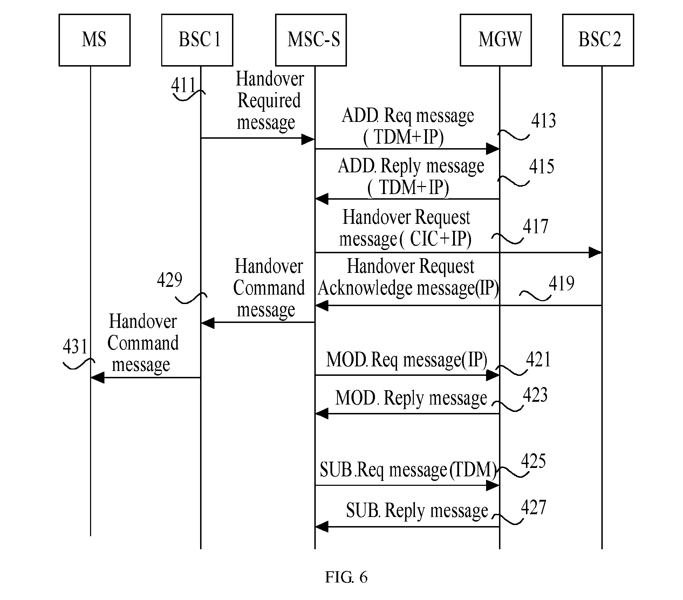

FIG. 6 is a flow chart of Embodiment 4 of a method for call handover according to the present invention. In this embodiment, as an example, a target BSC selects an IP transmission manner. steps 411 to 415 in this embodiment are the similar to steps 211 to 215 in Embodiment 2, except that the BSC2 selects the IP transmission manner as follows.

In step 417, the MSC-S receives the add endpoint reply message, and sends a Handover Request message to the BSC2.

The Handover Request message carries MSC-PCL1 (in which the speech codecs are sequenced in a recommended order, and an updated pRanC is an optimal pRanC), TDM endpoint information, and IP endpoint information. The TDM endpoint information can include a CIC information element, and a value of the CIC information element can be a CIC1 value corresponding to the TDM endpoint created by the MGW.

If the MGW creates only the IP endpoint, the Handover Request message in this step does not carry the CIC information element.

In step 419, the BSC2 receives the Handover Request message, selects the speech codec RanC2 from the MSC-PCL, and carries the RanC2 and such information as the information of the IP endpoint created by the BSC2 in the Handover Request Acknowledge message and returns them to the MSC-S.

The IP endpoint information carried in the message denotes that the BSC2 selects the A interface in the IP transmission manner, so that the IP endpoint created in advance on the MGW is modified and activated and an IP route link is activated according to the RanC2 selected by the BSC2.

In step 421, the MSC-S receives the Handover Request Acknowledge message, and knows that the IP transmission manner selected by the BSC2 is consistent with the type of the created IP endpoint, so that the MSC-S sends the modify endpoint request message carrying the IP endpoint information of the BSC2 and the RanC2 to the MGW.

In step 423, the MGW modifies the created IP endpoint, so that the IP endpoint is capable of using the codec type RanC2. Meanwhile, the IP endpoint is activated, so that the IP route link between the MGW and the BSC2 is established, a call service can be performed, and then the MGW returns an modify endpoint reply message to the MSC-S.

In step 425, if the MGW creates a TDM type endpoint previously, the MSC-S sends a delete endpoint request message carrying information of the TDM endpoint created by the MGW to the MGW

Because the BSC2 selects the IP transmission manner, the TDM endpoint created by the MGW previously needs not to be reserved, and the endpoint can be released.

In step 427, the MGW deletes the previously created TDM endpoint, and returns a delete endpoint reply message to the MSC-S.

In step 429, the MSC-S sends a Handover Command message to the BSC1. The Handover Command message carries the codec type RanC2 selected and used by the BSC2.

In step 431, the BSC1 sends the Handover Command message to the MS.

Through the Handover Command message, the RanC2 is notified to the MS, and handover of the MS is triggered. The MS is adjusted and is handed over onto a channel assigned by the BSC2 according to the Handover Command message, modifies the speech codec type of itself into the RanC2 simultaneously, and then uses the RanC2. If the RanC2 is the same as the RanC1, the MS continues using the RanC1.

Before step 417 of this embodiment, if the MGW creates the TDM type endpoint, the Handover Request message sent to the BSC2 in step 417 still needs to carry the CIC value assigned to the TDM endpoint created by the MGW, the reason is that at this time the MSC-S does not know which endpoint type the BSC2 selects.

In this embodiment, sequences of steps 425 to 427 and steps 429 to 431 are not limited, and steps 425 to 427 can be before steps 429 to 431 and can also be after steps 429 to 431.

According to the embodiment of the present invention, the message sent to the target BSC carries the CIC value of the TDM endpoint created by the MGW, so as to effectively guarantee that when the target BSC selects the TDM transmission manner, the target BSC and the CN select and use the same CIC, so as to optimize the call handover process.

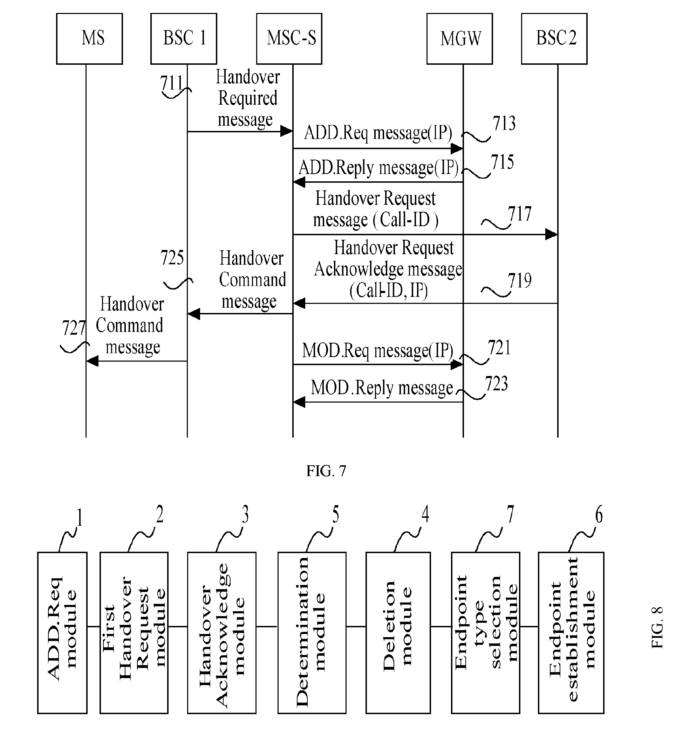

FIG. 7 is a flow chart of Embodiment 5 of a method for call handover according to the present invention. The method for call handover according to this embodiment includes the following steps.

In step 711, a BSC1 sends a Handover Required message to an MSC-S. The message carries speech codec RanC1 currently used by the BSC1.

In step 713, after receiving the Handover Required message, the MSC-S sends an add endpoint request message to an MGW. The message carries pRanC, and carries endpoint information simultaneously. For example, the endpoint information can include a type of endpoint to be created by the MGW, that is, an IP endpoint.

In step 715, the MGW creates the IP endpoint paired with the BSC2 according to the received add endpoint request message, and returns an add endpoint reply message. The message carries created endpoint information, that is, IP endpoint information.

In step 717, the MSC-S receives the add endpoint reply message, and sends a Handover Request message to the BSC2. The Handover Request message carries a Call-ID2 assigned by the MSC-S.

In order to prevent the BSC1 from receiving a call request for Call-IDs with the same value assigned by different MSC-Ss simultaneously, the Call-IDs from the different MSC-Ss should be distinguished. Because in one Public Land Mobile Network (PLMN) network, a number of MSC-Ss is much less than that of BSCs, and the MSC-S is responsible for controlling a specific call service, the Call-ID in this embodiment can only be assigned by the MSC-S, and the BSC has no right to assign the Call-ID. When a certain MSC-S assigns a Call-ID and establishes a corresponding call, and if the call is not handed over to another MSC-S or the call is not deleted, a Call-ID of the call is valid all the time, and a Call-ID value is incapable of being modified.

In step 719, the BSC2 receives the Handover Request message, accepts the Call-ID2, selects the speech codec RanC2 from the MSC-PCL, and carries the created IP endpoint information, the RanC2, and the Call-ID2 in the Handover Request Acknowledge message and returns them to the MSC-S. In step 721, the MSC-S receives the Handover Request Acknowledge message, knows that the BSC2 selects the IP transmission manner, and sends the modify endpoint request message carrying the IP endpoint information of the BSC2 and the RanC2 to the MGW. In step 723, the MGW modifies the created IP endpoint, so that the IP endpoint is capable of using the codec type RanC2. Meanwhile, the IP endpoint is activated, a call service can be performed between the MGW and the BSC2, and then the MGW returns a modify endpoint reply message to the MSC-S. Steps 725 to 727 are the same as steps 429 to 431 correspondingly.

In this embodiment, two expression manners for a Call-ID are provided.

### (1) A section of Call-ID value range is respectively assigned to each MSC-S in a global network.

In a case that a configuration in a manner of MSC in Pool is used in the network, that is, the BSC is connected with multiple MSC-Ss, different MSC-Ss cannot guarantee to assign Call-IDs with different values, and at this time, a method for assigning a section of Call-ID value range for each MSC-S in a global network respectively according to this embodiment can be adopted. A value range with a length of 32 bits of the Call-ID can be sectioned according to a number of NEs in the network, such as a number of MSC-Ss, and each MSC-S uses a section of the Call-ID. MSC-Ss in each Pool can also share a section of the Call-ID value range. For example, an MSC-S1, an MSC-S2, and an MSC-S3 form one shared Pool. When the MSC-S2 assigns a Call-ID with a value of 3 for one call, the MSC-S2 notifies the MSC-S1 and the MSC-S3, and the MSC-S1 and the MSC-S3 do not assign a call with a Call-ID with a value of 3 anymore. Likewise, when the MSC-S2 releases a call with a Call-ID with a value of 3, the MSC-S2 also notifies the MSC-S 1 and the MSC-S3, and the MSC-S1 and the MSC-S3 can assign a Call-ID with a value of 3.

### (2) A combination of an "NE identifier" and an "NE Call-ID" is used to denote a Call-ID.

The "NE identifier" can adopt such manners as signaling point codec, IP address uniquely identifying an NE, and NE number assigned within the global network, and the "NE identifier", such as an identifier of an MSC-S, can uniquely identify the NE within the global network.

The "NE Call-ID" denotes a number capable of being assigned by the NE to a call, can be a Call-ID value uniformly assigned within an NE, and can use values of a certain range to denote a specific Call-ID value, and specific assignment of the number can be controlled by the NE. Within the NE, the Call-ID value can not only be uniformly assigned, but also the assigned Call-ID values are managed and deleted.

For a specific embodiment, please refer to the description of the embodiment of the method for call establishment.

In the method for call handover according to the embodiment of the present invention, the combination of the NE identifier and the NE Call-ID is used to denote the Call-ID, or different Call-ID value ranges are assigned to the NE in advance, and a Call-ID is selected from an individual Call-ID value range and assigned to the call, so that uniqueness of the Call-ID is guaranteed, so as to guarantee that the BSC does not receive Call-IDs with the same value, thereby increasing a success rate of call handover.

In an embodiment, the present invention provides a system for call handover, which includes an add endpoint reply receiving module, a Handover Request message module, and a Handover Acknowledge message module. The add endpoint reply receiving module is configured to receive an add endpoint reply message sent by an MGW. The Handover Request message module is configured to send a Handover Request message carrying a CIC and endpoint information about an IP type to a target BSC when the add endpoint reply message indicates that the MGW successfully establishes a TDM endpoint and an IP endpoint. The Handover Acknowledge message module is configured to receive the Handover Request Acknowledge message returned by the target BSC. When the Handover Request Acknowledge message carries the endpoint information about an IP type, it indicates that the target BSC selects an IP port manner.

FIG. 8 is a schematic block diagram of a system for call handover according to an embodiment of the present invention. The system for call handover according to this embodiment includes an add endpoint request module 1, a first Handover Request module 2, and a Handover Acknowledge module 3. The add endpoint request module 1 is configured to send an add endpoint request message to an MGW, in which the add endpoint request message carries endpoint information about a TDM type and codec information recommended by a call corresponding to the TDM type, and endpoint information about an IP type and codec information recommended by a call corresponding to the IP type. The first Handover Request module 2 is configured to send a Handover Request message carrying a CIC information element and IP endpoint information to a target BSC when receiving an add endpoint reply message that the MGW successfully establishes the TDM endpoint and the IP endpoint. The Handover Acknowledge module 3 is configured to receive a Handover Request Acknowledge message carrying the endpoint information about a TDM type or the endpoint information about an IP type returned by the target BSC.

The system for call handover according to this embodiment further includes a deletion module 4, which is configured to notify to delete a established endpoint different from an endpoint type indicated by endpoint information carried in the Handover Request Acknowledge message, according to the endpoint information about a TDM type or the endpoint information about an IP type carried in the Handover Request Acknowledge message returned by the target BSC, when the TDM endpoint and the IP endpoint are successfully established. The system for call handover according to this embodiment further includes a determination module 5, which is configured to determine whether the endpoint type indicated by the endpoint information carried in the Handover Request Acknowledge message is the same as an endpoint type indicated in established endpoint information carried in the add endpoint reply message.

The system for call handover according to this embodiment further includes an endpoint establishment module 6, which is configured to establish the TDM endpoint and the IP endpoint according to the received add endpoint request message, and return the add endpoint reply message indicating that the TDM endpoint and the IP endpoint are successfully established. The system for call handover according to this embodiment further includes an endpoint type selection module 7, which is configured to receive the Handover Request message, and send the Handover Request Acknowledge message carrying the selected endpoint information.

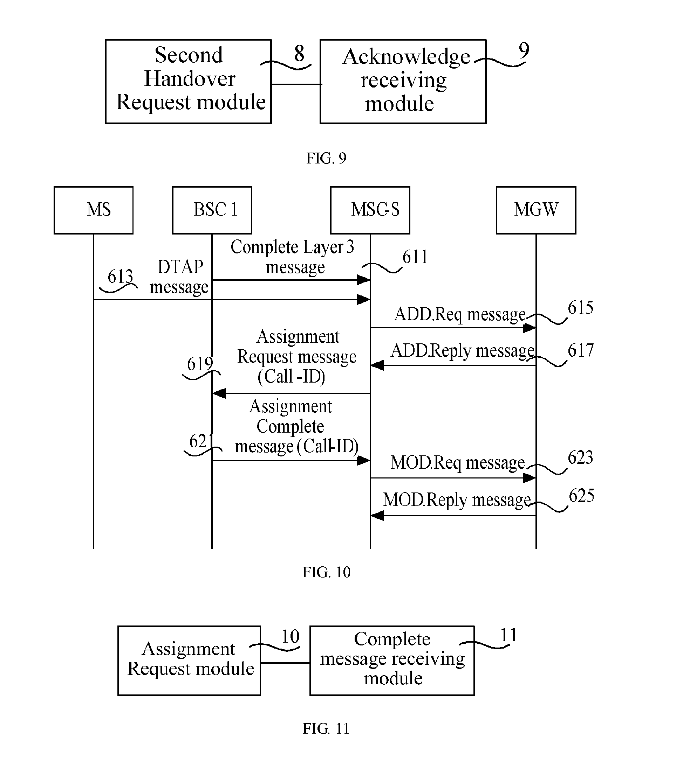

FIG. 9 is a schematic block diagram of a device for call handover according to an embodiment of the present invention. The device for call handover according to this embodiment includes a second Handover Request module 8, which is configured to receive an add endpoint reply message sent by an MGW, where the add endpoint reply message indicates that an IP endpoint is already established, and then send a Handover Request message carrying a Call-ID formed by an NE identifier and an NE Call-ID to a target BSC; or select one Call-ID value that is not occupied from a Call-ID value interval assigned to an MSC, and send a Handover Request message carrying the selected Call-ID value to the target BSC, in which Call-ID value intervals assigned to MSCs do not overlap with each other. The device for call handover according to this embodiment further includes an Acknowledge receiving module 9, which is configured to receive a Handover Request Acknowledge message carrying the Call-ID value returned by the target BSC after establishing a call identified by the Call-ID value.

FIG. 10 is a flow chart of a method for call establishment according to an embodiment of the present invention. The method for call establishment according to this embodiment includes the following steps.

In step 611, a BSC1 sends a Complete Layer3 message to an MSC-S. The message carries a BSC-SCL1, which denotes speech codec information currently supported by the BSC1, and also denotes that the BSC1 supports an IP type on an A interface.

In step 613, the MS sends a Direct Transfer Application Part (DTAP) message to the MSC-S. The message carries an MS-SCL1, which denotes speech codec information supported by an MS.

In step 615, the MSC-S receives the Complete Layer3 message and the DTAP message, selects an optimal recommended codec from an intersection of the codec information supported by the BSC1 and the MS, and then sends an add endpoint request message to an MGW. The message carries the optimal recommended codec, which indicates that the MGW establishes an IP endpoint according to the optimal recommended codec.

In step 617, the MGW receives the add endpoint request message, establishes the IP endpoint according to the optimal recommended codec in the message, and then returns an add endpoint reply message to the MSC-S.

In step 619, the MSC-S sends an Assignment Request message to the BSC1. The message carries a Call-ID1 assigned by the MSC-S to the BSC1 and information of the IP endpoint established on the MGW.

In order to prevent the BSC1 from receiving a call request for Call-IDs with the same value assigned by different MSC-Ss simultaneously, the Call-IDs from the different MSC-Ss should be distinguished. Because in one PLMN network, a number of MSC-Ss is much less than that of BSCs, and the MSC-S is responsible for controlling a specific call service, the Call-ID in this embodiment can be assigned by the MSC-S only, and the BSC1 has no right to assign the Call-ID. When a certain MSC-S assigns a Call-ID and establishes a corresponding call, and if the call is not handed over to another MSC-S or the call is not deleted, a Call-ID of the call is valid all the time, and a Call-ID value is incapable of being modified.

In step 621, the BSC1 establishes a connection between the MS and the BSC1, and sends an Assignment Complete message to the MSC-S. The message carries such information as the created IP endpoint, the codec type selected for the IP endpoint, and the Call-ID1.

In step 623, the MSC-S sends a modify endpoint request message to the MGW The message carries the IP endpoint assigned by the BSC1 and selected and used codec information.

In step 625, the MGW receives the modify endpoint request message, modifies the created IP endpoint, so as to enable the IP endpoint to use the codec type carried in the modify endpoint request message, activates the IP endpoint, so that an IP link between the MGW and the BSC 1 is already established, and then returns a modify endpoint reply message.

In this embodiment, two expression manners for a Call-ID are provided.

### (1) A section of Call-ID value range is respectively assigned for each MSC-S in a global network.

In a case that a configuration in a manner of MSC in Pool is used in the network, that is, the BSC is connected with multiple MSC-Ss, it is impossible to guarantee that different MSC-Ss assign Call-IDs with different values, and at this time, a method for assigning a section of Call-ID value range for each MSC-S in a global network respectively according to this embodiment can be adopted. A value range with a length of 32 bits of the Call-ID can be sectioned according to a number of NEs in the network, such as a number of MSC-Ss, and each MSC-S uses a section of the Call-ID. MSC-Ss in each Pool can also share a section of the Call-ID value range. For example, an MSC-S1, an MSC-S2, and an MSC-S3 form one shared Pool. When the MSC-S2 assigns a Call-ID with a value of 3 for one call, the MSC-S2 notifies the MSC-S1 and the MSC-S3, and the MSC-S1 and the MSC-S3 do not assign a Call-ID with a value of 3 any more. Likewise, when the MSC-S2 releases a call with a Call-ID = 3, the MSC-S2 also notifies the MSC-S 1 and the MSC-S3, and the MSC-S 1 and the MSC-S3 can assign a Call-ID with a value of 3.

### (2) A combination of an "NE identifier" and an "NE Call-ID" is used to denote a Call-ID.

The "NE identifier" can adopt such manners as signaling point codec, IP address uniquely identifying an NE, and NE number assigned within the global network, and the "NE identifier", that is, an identifier of an MSC-S, can uniquely identify the NE within the global network.

The "NE Call-ID" denotes a number capable of being assigned by the NE to a call, can use values of a certain range to denote a specific Call-ID value, and specific assignment of the number can be controlled by the NE.

For example, if the "NE identifier" adopts the signaling point codec, an expression manner of the Call-ID is as shown in Table 3.

**Table 3**

| **8** | **7** | **6** | **5** | **4** | **3** | **2** | **1** | |
|---|---|---|---|---|---|---|---|---|
| Information element identifier | | | | | | | | Bytes 1 |
| Information element length | | | | | | | | Byte 2 |
| Signaling point codec | | | | | | | | Byte 3 - (n+5) |
| Call number within NE | | | | | | | | Byte (n+6) - (n+9) |

The "NE Call-ID" is a Call-ID value uniformly assigned within the NE, and a length of 4 bytes is used as shown in Table 2, which is sufficient for a single NE to assign a call. An expression manner of an "NE Call-ID" part is as shown in Table 4.

**Table 4**

| **8** | **7** | **6** | **5** | **4** | **3** | **2** | **1** | |
|---|---|---|---|---|---|---|---|---|
| Field Element identifier | | | | | | | | Byte 1 |
| Length = (n+1) | | | | | | | | Byte 2 |
| O/E Nature of address indicator | | | | | | | | Byte 3 |
| Signaling point codec address information | | | | | | | | Byte 4 - (n+3) |

In the table, n is a byte length of a "signaling point codec address information" part in Table 4.

O/E is an odd/even indicator: in which bit 8 of octet 3 denotes odd/even of a number of address signals contained in address information, which is given in the following.
0: even address signals
1: odd address signals

The nature of address indicator: bits 1 to 7 of the octet 3 denote attributes of the address information, which are given in the following.
Bit 7654321
0000000 (0) idle
0000001 (1) user number
0000010 (2) spare national
0000011 (3) national significant number
0000100 (4) international number
0000101 (5) to 1111111 (127) idle
address information: an octet 4 and its subsequent information are address signals, a format is given in the following.

If O/E = 1, K is an odd number and K = n/2-1. Each address signal occupies 4 bits, and an expression manner is as shown in Table 5.

**Table 5**

| **8** | **7** | **6** | **5** | **4** | **3** | **2** | **1** | |
|---|---|---|---|---|---|---|---|---|
| 2^{nd} address signal | | | | 1^{st} address signal | | | | Byte 4 |
| 4^{th} address signal | | | | 3^{rd} address signal | | | | Byte 5 |
| ... | | | | ... | | | | ... |
| Fill 0 | | | | K^{th} address signal | | | | Byte (n+3) |

If O/E = 0, K is an even number and K = n/2. Each address signal occupies 4 bits, an expression manner is as shown in Table 6.

**Table 6**

| **8** | **7** | **6** | **5** | **4** | **3** | **2** | **1** | |
|---|---|---|---|---|---|---|---|---|
| 2^{nd} address signal | | | | 1^{st} address signal | | | | Byte 4 |
| 4^{th} address signal | | | | 3^{rd} address signal | | | | Byte 5 |
| ... | | | | ... | | | | ... |
| K^{th} address signal | | | | (K-1)^{th} address signal | | | | Byte (n+3) |

In the method for call establishment according to the embodiment of the present invention, the combination of the NE identifier and the NE Call-ID is used to denote the Call-ID, or different Call-ID value ranges are assigned to the NE in advance, and a Call-ID value is selected from an individual Call-ID value range and assigned to the call, so that uniqueness of the Call-ID is guaranteed, so as to guarantee that the BSC does not receive Call-IDs with the same value, thereby increasing a success rate of call establishment.

FIG. 11 is a schematic block diagram of a device for call establishment according to an embodiment of the present invention. The device for call establishment according to this embodiment includes an Assignment Request module 10, which is configured to receive an add endpoint reply message sent by an MGW, where the add endpoint reply message indicates that an IP endpoint is already established, and then carry a Call-ID formed by an NE identifier and an NE Call-ID in an Assignment Request message and send it to a BSC; or select one Call-ID value that is not occupied from a Call-ID value interval assigned to an MSC, and send an Assignment Request message carrying the selected Call-ID value to the BSC. The device for call establishment according to this embodiment can further include a Complete message receiving module 11, which is configured to receive an Assignment Complete message carrying a Call-ID value returned by the BSC after establishing a call identified by the Call-ID value.

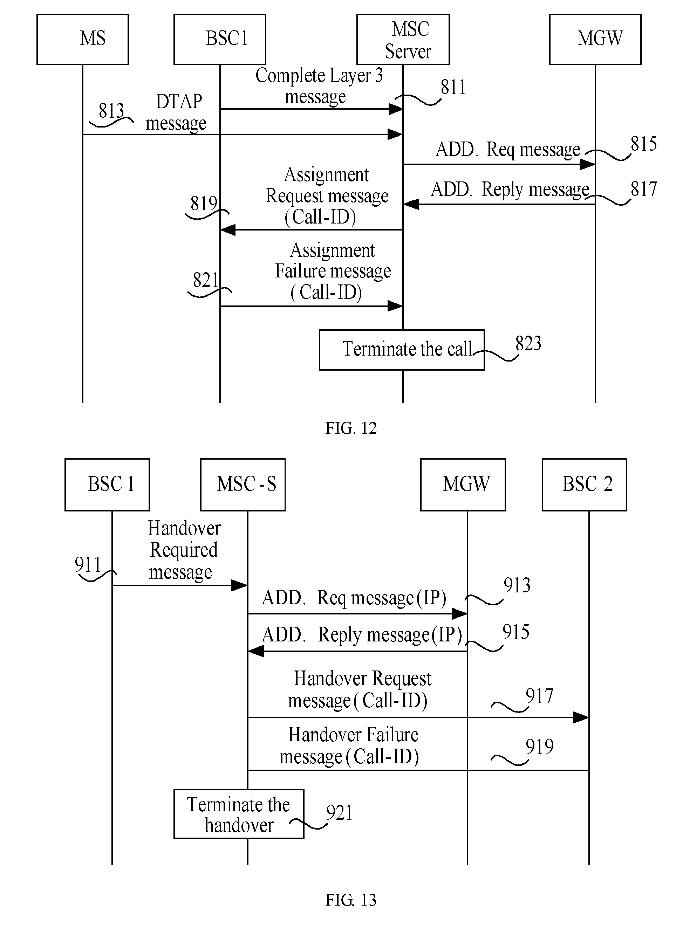

FIG. 12 is a flow chart of Embodiment 1 of a method for call processing according to the present invention. Steps 811 to 819 in this embodiment are similar to steps 611 to 619 in the embodiment shown in FIG. 8, and differences are in the following steps.

In step 821, the BSC1 receives the Assignment Request message sent by the MSC-S and obtains a Call-ID value carried in the message, and the BSC1 determines whether the Call-ID value exists in the BSC1 and determines whether an identification manner the Call-ID is valid. If the value exists and/or the identification manner is invalid, the Assignment Failure message carrying the Call-ID and/or a corresponding failure reason indication value is sent to the MSC-S.

According to this embodiment, reasons for call establishment failure include that the BSC receives Call-ID values with a repetitive value, the speech codec type is not supported, resources are unavailable, and the Call-ID identification manner is invalid. The reasons also cause call failure. The Call-ID identification manner is invalid, such as the Call-ID lacks one byte, the failure reason indication value indicates that the format of the Call-ID is incorrect, so as to indicate that the Call-ID identification manner is invalid. If the BSC receives the Call-ID values with the repetitive value, the failure reason indication value indicates that the Call-ID exists.

In step 823, the MSC-S terminates the call process corresponding to the Call-ID value.

FIG. 13 is a flow chart of Embodiment 2 of a method for call processing according to the present invention. Steps 911 to 917 in this embodiment are similar to steps 711 to 717 in the embodiment shown in FIG. 9, and differences are in the following steps.

In step 919, the BSC2 receives the Handover Request message and obtains a Call-ID value in the Handover Request message, and the BSC2 determines whether the Call-ID value exists in the BSC2 and determines whether an identification manner the Call-ID is valid. If the value exists and/or the identification manner is invalid, the Handover Failure message carrying the Call-ID and/or a corresponding failure reason indication value is sent to the MSC-S.

According to this embodiment, reasons for call handover failure include the BSC receives Call-ID values with a repetitive value, the speech codec type is not supported, resources are unavailable, and the Call-ID identification manner is invalid. The reasons all cause call failure. The Call-ID identification manner is invalid, such as the Call-ID lacks one bit position, the BSC2 can determine that the format of the Call-ID is incorrect, so as to notify the failure reason indication value including the format of the Call-ID is incorrect to the MSC-S. If the BSC receives Call-ID values with a repetitive value, the failure reason indication value including the Call-ID exists is notified to the MSC-S.

In step 921, the MSC-S terminates the handover process corresponding to the Call-ID value.

According to the embodiment of the present invention, the method for call processing is capable of effectively processing a call of the Call-ID with the repetitive value received by the BSC. Specifically, a Call-ID with the existent same value is carried in the Assignment Failure message or Handover Failure message and is notified to the MSC-S, so that the MSC-S can terminate an abnormal call process caused by the repetitive Call-ID according to the Call-ID value.

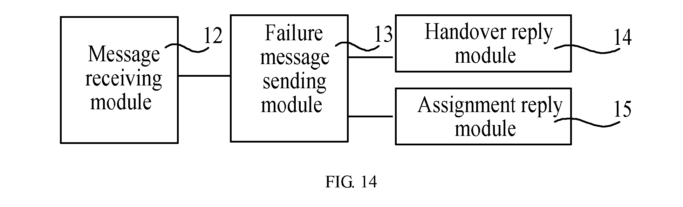

FIG. 14 is a schematic block diagram of a device for call processing according to an embodiment of the present invention. The device for call processing according to this embodiment includes a message receiving module 12 and a failure message sending module 13. The message receiving module 12 is configured to receive an Assignment Request message carrying a Call-ID, or receive a Handover Request message carrying the Call-ID. The failure message sending module 13 is configured to receive an Assignment Request message carrying a Call-ID, return an Assignment Failure message carrying a Call-ID value and/or a corresponding failure reason indication value to an MSC when failing to assign a call according to the received Assignment Request message carrying the Call-ID, in which the failure reason indication value indicates that the Call-ID exists or a format of the Call-ID is incorrect; or configured to receive the Handover Request message carrying the Call-ID, return a Handover Failure message carrying a Call-ID value and/or a corresponding failure reason indication value to the MSC when failing to assign a call according to the received Handover Request message carrying the Call-ID. The failure message sending module 13 can further send the Assignment Failure message or the Handover Failure message carrying the failure reason indication value indicating that the format of the Call-ID is incorrect or the Call-ID exists to the MSC. The device for call processing according to this embodiment can further include a handover reply module 14 and/or an assignment reply module 15. The handover reply module 14 is configured to return a Handover Request Acknowledge message after the call is already assigned when the Call-ID value does not exist in a target BSC and an identification manner is valid. The assignment reply module 15 is configured to return an Assignment Complete message after the call is already assigned when the Call-ID value does not exist in the target BSC and the identification manner is valid.

Persons of ordinary skill in the art should understand that all or a part of the steps of the method according to the embodiments of the present invention may be implemented by a program instructing relevant hardware. The program may be stored in a computer readable storage medium. When the program is run, the program includes the steps in the embodiments. The corresponding storage medium may be a Read-Only Memory (ROM), a magnetic disk, or an optical disk.

Finally, it should be noted that the above embodiments are merely provided for describing the technical solutions of the present invention, but not intended to limit the present invention. It should be understood by persons of ordinary skill in the art that although the present invention has been described in detail with reference to the foregoing embodiments, modifications can be made to the technical solutions described in the foregoing embodiments, or equivalent replacements can be made to some technical features in the technical solutions, if such modifications or replacements do not cause the essence of corresponding technical solutions to depart from the spirit and scope of the present invention.

## Claims

1. A method for call handover, comprising:
receiving an add endpoint reply message sent by a media gateway (MGW);
sending a Handover Request message carrying a Circuit Identifier Code (CIC) and endpoint information about an IP type to a target Base Station Controller (BSC), when the add endpoint reply message indicates that the MGW successfully establishes a Time Division Multiple (TDM) endpoint and an Internet Protocol (IP) endpoint; and
receiving a Handover Request Acknowledge message returned by the target BSC, wherein the Handover Request Acknowledge message indicates that the target BSC selects an IP port manner when the Handover Request Acknowledge message carries the endpoint information about an IP type.

2. The method according to claim 1, further comprising:
when the add endpoint reply message indicates that the MGW successfully establishes the IP endpoint, sending the Handover Request message carrying the endpoint information about an IP type to the target BSC; and
receiving the Handover Request Acknowledge message returned by the target BSC, wherein the Handover Request Acknowledge message indicates that the target BSC selects a TDM port manner when the Handover Request Acknowledge message carries the CIC, and notifying the MGW of re-establishing a TDM endpoint corresponding to the CIC; wherein the Handover Request Acknowledge message indicates that the target BSC selects the IP port manner when the Handover Request Acknowledge message carries the endpoint information about an IP type.

3. The method according to claim 1, further comprising:
sending an add endpoint request message to the MGW, wherein the add endpoint request message carries endpoint information about a TDM type and codec information that corresponding to the TDM type, and the endpoint information about an IP type and codec information corresponding to the IP type.

4. The method for call handover according to any one of claims 1 to 3, further comprising:
notifying the MGW of deleting a successfully established endpoint different from a type of an endpoint selected by the target BSC, according to the Handover Request Acknowledge message returned by the target BSC.

5. A system for call handover, wherein the system comprises: an add endpoint reply receiving module, configured to receive an add endpoint reply message sent by a media gateway (MGW);
a Handover Request message module, configured to send a Handover Request message carrying a Circuit Identifier Code (CIC) and endpoint information about an Internet Protocol (IP) type to a target Base Station Controller (BSC) when the add endpoint reply message indicates that the MGW successfully establishes a Time Division Multiple (TDM) endpoint and an IP endpoint; and
a Handover Acknowledge message module, configured to receive a Handover Request Acknowledge message returned by the target BSC, wherein the Handover Request Acknowledge message indicates that the target BSC selects an IP port manner when the Handover Request Acknowledge message carries the endpoint information about an IP type.

6. The system for call handover according to claim 5, further comprising:
a deletion module, configured to notify the MGW of deleting a established endpoint different from a type of an endpoint selected by the target BSC according to the Handover Request Acknowledge message returned by the target BSC.

7. The system for call handover according to claim 5, further comprising:
an endpoint establishment module, configured to establish the TDM endpoint and the IP endpoint according to the received add endpoint request message, and return the add endpoint reply message indicating that the TDM endpoint and the IP endpoint are established.

8. The system for call handover according to claim 5, further comprising:
an endpoint type selection module, configured to receive the Handover Request message, and send the Handover Request Acknowledge message carrying information of selected endpoint.

9. A method for call handover, comprising:
receiving an add endpoint reply message sent by a media gateway (MGW), wherein the add endpoint reply message indicates that an Internet Protocol (IP) endpoint is already established;
sending a Handover Request message carrying a Call Identifier (Call-ID) formed by a network element (NE) identifier and an NE Call-ID to a target Base Station Controller (BSC); or selecting one Call-ID value that is not occupied from a Call-ID value interval assigned to a Mobile Switching Center (MSC), and sending a Handover Request message carrying the selected Call-ID value to the target BSC, wherein Call-ID value intervals assigned to MSCs do not overlap with each other; and
receiving a Handover Request Acknowledge message returned by the target BSC after establishing a call identified by the Call-ID value.

10. The method for call handover according to claim 9, wherein the NE identifier is a unique identifier for the NE in a global network, the NE identifier comprises: a signaling point codec, or an NE IP address, or an NE number uniformly assigned within the global network; and the NE Call-ID comprises a Call-ID value uniformly assigned within the NE.

11. The method according to claim 9, wherein a BSC has no right to assign the Call-ID value; when a certain MSC assigns a Call-ID and establishes a corresponding call, if the call is not handed over to another MSC or the call is not deleted, the Call-ID of the call is valid all the time, and the Call-ID value is incapable of being modified.

12. A method for call processing, comprising:
receiving an Assignment Request message or a Handover Request message, where the Assignment Request message or the Handover Request message carries a Call Identifier (Call-ID), and when failing to assign a call according to the Assignment Request message carrying the Call-ID or the Handover Request message carrying the Call-ID, returning an Assignment Failure message carrying a failure reason indication value or a Handover Failure message carrying a failure reason indication value to a Mobile Switching Center (MSC), wherein the failure reason indication value indicates that the Call-ID exists or a format of the Call-ID is incorrect.

13. The method for call processing according to claim 12, wherein the failing to assign the call according to the Assignment Request message or the Handover Request message carrying the Call-ID comprises: when a Call-ID value exists in a Base Station Controller (BSC), and/or the Call-ID value is invalid, the call fails to be assigned.

14. The method for call processing according to claim 12, wherein after the sending the Assignment Failure message carrying the failure reason indication value to the MSC, the method further comprises:
terminating, by the MSC, a call corresponding to the Call-ID value according to the failure reason indication value.

15. The method for call processing according to claim 12, further comprising:
returning an Assignment Complete message or a Handover Request Acknowledge message after successfully assigning the call, when the Call-ID value does not exist in a BSC, and is determined by the BSC to be valid.

16. A device for call handover, comprising:
a second Handover Request module, configured to receive an add endpoint reply message sent by a media gateway (MGW), wherein the add endpoint reply message indicates that an Internet Protocol (IP) endpoint is already established; send a Handover Request message carrying a Call Identifier (Call-ID) formed by a network element (NE) identifier and an NE Call-ID to a target Base Station Controller (BSC); or select one Call-ID value that is not occupied from a Call-ID value interval assigned to an MSC, and send a Handover Request message carrying the selected Call-ID value to the target BSC, wherein Call-ID value intervals assigned to MSCs do not overlap with each other; and
an Acknowledge receiving module, configured to receive a Handover Request Acknowledge message returned by the target BSC after establishing a call identified by the Call-ID value.

17. A device for call processing, comprising:
a message receiving module, configured to receive an Assignment Request message carrying a Call Identifier (Call-ID), or receive a Handover Request message carrying the Call-ID; and
a failure message sending module, configured to return an Assignment Failure message carrying a failure reason indication value to a Mobile Switching Center (MSC) when failing to assign a call according to the Assignment Request message carrying the Call-ID received by the message receiving module, wherein the failure reason indication value comprises that the Call-ID exists or a format of the Call-ID is incorrect;
or configured to return a Handover Failure message carrying a failure reason indication value to the MSC when failing to assign a call according to the Handover Request message carrying the Call-ID received by the message receiving module, wherein the failure reason indication value comprises that the Call-ID exists or the format of the Call-ID is incorrect.

18. The device for call processing according to claim 17, further comprising:
a handover reply module, configured to return a Handover Request Acknowledge message after the call is already assigned when a Call-ID value does not exist in a target Base Station Controller (BSC) and the Call-ID value is valid;
and/or an assignment reply module, configured to return an Assignment Complete message after the call is already assigned when the Call-ID value does not exist in the target BSC and the Call-ID value is valid.
